# EUROPEAN PATENT APPLICATION

(11) **EP 4 704 380 A1**
(43) Date of publication of application: **04.03.2026**
(21) Application number: 24223691.7
(22) Date of filing: 30.12.2024
(51) Int. Cl.: H04L 9/40, H04L 101/668, H04L 101/695

(54) **METHOD AND APPARATUS FOR POLICY MATCHING**

(30) Priority: 26.08.2024 CN 202411181017
(71) Applicant: New H3C Security Technologies Co., Ltd., Hefei, Anhui 230088 (CN)
(72) Inventor: YUE, Weiguo, Beijing, 100102 (CN)
(74) Representative: 2SPL Patentanwälte PartG mbB

(57) **Abstract**

The present disclosure provides a policy matching method and apparatus. In an example of the present disclosure, a service packet is received. An IP policy group is searched based on a target internet protocol (IP) address of the service packet and by using a searching algorithm matching with the IP policy group. A target security policy is determined based on a target IP address subrange that the target IP address belongs to. A policy matching process is performed on the service packet by using the target security policy. Keys of the IP policy group include one or more IP address subranges obtained by dividing an IP address range that each of the IP addresses belongs to, values of the IP policy group include one or more security policies corresponding to one or more IP address ranges that each of the one or more IP address subranges belongs to.

## Description

### TECHNICAL FIELD

The present disclosure relates to the field of communication technology, particularly to a policy matching method and apparatus.

### BACKGROUND

In network security protection, security policies may support the use of internet protocol (IP) addresses as filtering conditions for security safeguards. However, in response to a massive number of IP addresses are configured within numerous security policies in network security apparatuses, traditional solutions that check policies one by one may no longer meet high-performance requirements. Therefore, a rapid searching mechanism is needed for a given IP address to achieve fast policy matching.

In related arts, network security apparatuses convert IP addresses into network segments and construct a Trie acceleration table, utilizing the Trie acceleration table to match IP addresses with a high speed. However, in this method, in response to determining that security policies reference a massive number of IP addresses, constructing the aforementioned Trie acceleration table not only takes a long time but also consumes a vast amount of memory, causing even exhausting the memory of network security apparatuses. Furthermore, during policy matching based on this acceleration table, it may also affect the speed of policy search.

### SUMMARY

The present disclosure provides a policy matching method and apparatus to enhance the matching speed of policy matching based on IP addresses.

In some examples, the disclosure provides a policy matching method, applied to a network security apparatus, where the method includes:
receiving a service packet;
searching, based on a target internet protocol (IP) address in the service packet and by using a searching algorithm matching an IP policy group, the IP policy group; and determining a target security policy corresponding to a target IP address subrange that the target IP address belongs to; where the IP policy group is constructed based on a set algorithm, IP addresses that are pre-configured, and a security policies respectively corresponding to the IP addresses, keys of the IP policy group include one or more IP address subranges obtained by dividing an IP address range that each of the IP addresses belongs to, values of the IP policy group include one or more security policies corresponding to one or more IP address ranges that each of the one or more IP address subranges belongs to, and the one or more IP address subranges in the IP policy group are ordered with no overlap with each other; and
performing, by using the target security policy, a policy matching processing on the service packet.

In some examples, the present disclosure further provides a policy matching apparatus, applied in network security apparatuses, where the apparatus includes:
a receiving unit is to receive a service packet;
a searching unit is to search, based on a target IP address in the service packet and by using a searching algorithm matching with an IP policy group, the IP policy group; and is to determine a target security policy corresponding to a target IP address subrange that the target IP address belongs to; where the IP policy group is constructed based on a set algorithm, IP addresses that are pre-configured, and security policies respectively corresponding to the IP addresses, keys of the IP policy group include one or more IP address subranges obtained by dividing an IP address range that each of the IP addresses belongs to, values of the IP policy group include one or more security policies corresponding to one or more IP address ranges that each of the one or more IP address subranges belongs to, and the one or more IP address subranges in the IP policy group are ordered with no overlap with each other;
a matching unit is to a perform, by using the target security policy, a policy matching processing on the service packet.

In some examples of the present disclosure, an electronic apparatus is provided, which includes a processor and a machine-readable storage medium. The machine-readable storage medium stores computer programs executable by the processor. The processor, prompted by the computer programs, executes the method provided in the embodiments of the present disclosure.

In some examples of the present disclosure, a machine-readable storage medium is provided, which stores computer programs. When invoked and executed by a processor, the computer programs prompt the processor to execute the method provided in the embodiments of the present disclosure.

Beneficial effects of the present disclosure are as below:
The policy matching method and apparatus provided in the disclosures receiving a service packet; searching, based on the target IP address in the service packet and by using a searching algorithm matching with the IP policy group, the IP policy group; determining the target security policy corresponding to the target IP address subrange that the target IP address belongs to; and performing, by using the target security policy, a policy matching processing on the service packet.

Since the aforementioned IP policy group is constructed based on a preset algorithm, IP addresses that are pre-configured, and security policies respectively corresponding to the IP addresses, and the policy searching is performed based on the searching algorithm corresponding to the IP policy group, in response to performing the policy searching based on the appropriate searching algorithm, the searching speed of the security policies may be ensured; moreover, keys of the IP policy group include one or more IP address subranges obtained by dividing an IP address range that each of the IP addresses belongs to, values of the IP policy group include one or more security policies corresponding to one or more IP address ranges that each of the one or more IP address subranges belongs to. The one or more IP address subranges in the IP policy group are ordered. In this way, in response to performing policy searching based on the ordered IP policy group, the policy searching speed can be further improved. Furthermore, there is no overlap among the IP address subranges of the IP policy group. In this way, in response to performing policy searching based on the target IP address, the situation of determining at least two IP address subranges can be avoided, thereby preventing the occurrence of finding inaccurate multiple security policies due to multiple IP address subranges are matched.

### BRIEF DESCRIPTION OF THE DRAWINGS

FIG. 1 is a schematic diagram of a policy matching method provided by an example of the present disclosure;
FIG. 2 is a schematic diagram of the division of subranges of IP addresses provided by an example of the present disclosure;
FIG. 3 is a schematic diagram of a policy matching apparatus provided by an example of the present disclosure; and
FIG. 4 is a schematic diagram of an electronic apparatus for implementing the policy matching method provided by an example of the present disclosure.

### DETAILED DESCRIPTION

Here, exemplary examples will be described in detail with examples shown in the drawings. Unless otherwise indicated, the same numbers in different drawings represent the same or similar elements. The implementations described in the following exemplary examples do not represent all implementations consistent with the present disclosure. Rather, they are merely examples of apparatuses and methods that are consistent with some aspects of the present disclosure.

The terms used in the present disclosure are solely for the purpose of describing specific examples and are not intended to limit the present disclosure. The singular forms "a," "said," and "the" used in the present disclosure are also intended to include plural forms, unless the context clearly indicates otherwise. It should also be understood that the term "and/or" used herein refers to any or all possible combinations of the corresponding listed items.

It should be understood that, although terms such as "first," "second," "third," etc., may be used in the present disclosure to describe various information, these terms should not be limited to these terms. These terms are only used to distinguish the same type of information from each other. For example, without departing from the scope of the present disclosure, first information may also be referred to as second information, and similarly, second information may also be referred to as first information. Depending on the context, words such as "if" used herein may be interpreted as "when" or "in response to determining."

Below, the policy matching method provided by the present disclosure will be described in detail.

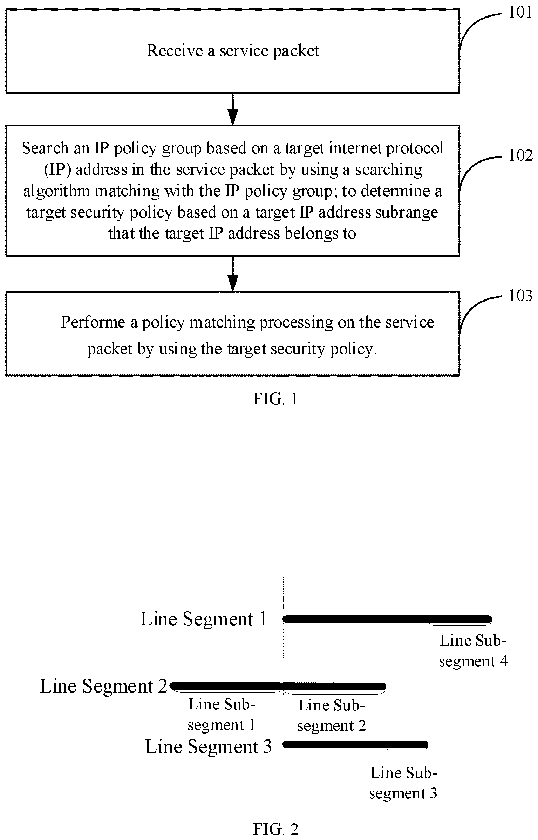

Refer to FIG. 1, which is a schematic diagram of a policy matching method provided by the present disclosure. The method may be applied to a network security apparatus, which may include but is not limited to a firewall apparatus, a security gateway, etc. In response to applying the method, the network security apparatus may execute the following processes 101 to 103.

At process 101: a service packet is received.

At process 102: an IP policy group is searched based on a target IP address in the service packet by using a searching algorithm matching the IP policy group to determine a target security policy based on a target IP address subrange that the target IP address belongs to.

The IP policy group is constructed based on a set algorithm, IP addresses that are pre-configured, and security policies respectively corresponding to the IP addresses, keys of the IP policy group include one or more IP address subranges obtained by dividing an IP address range that each of the IP addresses belongs to, values of the IP policy group include one or more security policies corresponding to one or more IP address ranges that each of the one or more IP address subranges belongs to, and the one or more IP address subranges in the IP policy group are ordered with no overlap with each other.

In this process, after the service packet enters the network security apparatus, in response to determining that the current matching rule in the network security apparatus is to perform policy matching based on the IP address, then the network security apparatus may extract the target IP address from the service packet; and the network security apparatus also obtains the pre-generated IP policy group. Since the network security apparatus already knows the generation method of the IP policy group, the network security may use a searching algorithm that matches the generation method of the IP policy group to match the IP address of the service packet with the IP policy group, aiming to improve the policy matching speed.

In some examples, the target IP address may be but is not limited to the source IP address and/or the destination IP address. In response to the IP address is the source IP address or the destination IP address, the IP policy group may generate based on the source IP address or the destination IP address and the corresponding security policies by using the aforementioned method. In response to the IP address is both the source IP address and the destination IP address, the keys of the IP policy group may include the source IP address subrange and the destination IP address subrange.

For easier understanding, an example where the IP address is a single IP address (a source IP address or a destination IP address) may be taken for illustration. To improve policy matching speed, in this example converting the pre-configured correspondence between security policies and IP addresses into a correspondence between IP address ranges and security policies is proposed. In this way, compared to traversing each IP address one by one, matching IP addresses based on address ranges is faster. Furthermore, in order to improve policy matching speed, in this example, dividing each IP address range into multiple IP address subranges without overlapping and then generating the IP policy group based on the IP address subranges and their corresponding security policies are proposed. By dividing into non-overlapping IP address subranges, the occurrence of searching conflicts during the searching process is avoided. Moreover, in order to improve searching speed, in this example, constructing the IP policy group in the order of the IP address subranges is proposed to ensure that the IP address subranges included in the IP policy group are ordered. In this way, in response to searching based on the IP policy group, the searching speed for security policies may be improved.

In some examples, different algorithms may be used in response to generating the IP policy group based on IP address subranges and their corresponding security policies. Besides, in response to generating the IP policy group using different algorithms, corresponding searching algorithms are also provided for IP address matching, which aim to improve matching speed.

Based on this, after extracting the IP address from the service packet, the IP address may be matched by using the searching algorithm that matches the IP policy group based on the generation method of the IP policy group, thereby, searching the target security policy corresponding to the target IP address subrange that the destination IP address belongs to with a high speed.

At process 103: policy matching processing is performed on the service packet by using the target security policy.

In this process, after determining the target security policy, the service packet may be subjected to policy matching processing based on the target security policy to assess the security of the service packet.

In response to implementing the aforementioned policy matching method, the following processes are taken: receiving a service packet; searching, based on a target IP address in the service packet and by using a searching algorithm matching with an IP policy group, the IP policy group, to determine a target security policy corresponding to a target IP address subrange that the target IP address belongs to; performing, by using the target security policy, a policy matching processing on the service packet. Since the IP policy group is constructed based on a set algorithm, IP addresses that are pre-configured, and security policies respectively corresponding to the IP addresses, and policy searching is performed by using a searching algorithm corresponding to IP policy group; in addition, keys of the IP policy group include one or more IP address subranges obtained by dividing an IP address range that each of the IP addresses belongs to, values of the IP policy group include one or more security policies corresponding to one or more IP address ranges that each of the one or more IP address subranges belongs to, and the one or more IP address subranges in the IP policy group are ordered with no overlap with each other. In this way, in response to performing policy searching based on the ordered IP policy group, the policy search speed may be further improved. Furthermore, there is no overlap among the IP address subranges in the IP policy group, in this way, in response to performing policy searching based on the destination IP address, the occurrence of determining at least two IP address subranges may be avoided, thereby preventing the occurrence of searching inaccurate multiple security policies due to multiple IP address subranges are matched.

Based on the above examples, in a possible example, process 102 may be performed based on the following process: in response to the IP policy group being an array structure, a binary searching algorithm is applied to search the IP policy group by using the target IP address in the service packet.

In some examples, after obtaining each IP address subrange, the IP address subranges and security policies respectively corresponding to the IP address subranges may be written into a set array structure in order to ensure that the obtained IP policy group is ordered. For example, in response to writing in an ascending order, the IP address subrange and the corresponding security policy of the IP address subrange for a smaller IP address are ranked at the front of the set array structure, and the IP address subrange and the corresponding security policy of the IP address subrange for a larger IP address are ranked at the back of the set data structure, thereby obtaining an ordered IP policy group. For easier understanding, an IP policy group as shown in Table 1 may be taken for example. In Table 1, the IP address at the right endpoint of Range 1 is less than the IP address at the left endpoint of Range 2, the IP address at the right endpoint of Range 2 is less than the IP address at the left endpoint of Range 3, and so on.

**Table 1**

| Key: IP Address Subrange | Value: Security Policy |
|---|---|
| range 1 | security policy 1 |
| range 2 | security policy 2 |
| range 3 | security policy 3 |
| ... ... | ... ... |

On this basis, in response to matching based on the target IP address in the service packet, the binary searching method may be adopted to searching for the security policy. For example, in response to determining that the IP address subranges in the IP policy group are sorted in an ascending order, it is determined whether the target IP address is matched with the IP address subrange in the middle of the IP policy group. In response to determining that the target IP address does not hit the IP address subrange in the middle of the IP policy group, the target IP address may also be determined being greater than or less than the IP addresses in the IP address subrange in the middle of the IP policy group. Based on this, the range where the target IP address is located may be confirmed. Taking the case where the target IP address is less than the IP addresses in the IP address subrange in the middle of the IP policy group as an example, the target IP address may be determined being located within the range between the starting position and the middle position in the IP policy group. Then, based on this range between the starting position and the middle position in the IP policy group, the binary searching is performed again, and the above searching process is repeated until the IP address subrange hit by the target IP address is found, or the match is unsuccessful. In response to determining that the hit IP address subrange is found, the security policy indicated by the value corresponding to the hit IP address subrange is recorded as the aforementioned target security policy.

In response to determining that the match is unsuccessful, no IP address subrange in the current IP policy group includes the target IP address. At this point, a searching failure may be output, and then the network security apparatus may perform other security policy matching rules or output an alarm to facilitate the operation and maintenance personnel to perform related operations.

In some examples, in another example, process 102 may also be performed based on the following processes: in response to determining that the IP policy group is an IP policy tree constructed by applying a balanced binary tree algorithm based on one or more IP address subranges of each of the IP addresses and one or more security policies corresponding to the one or more IP address subranges, for the current searching node, determining whether the target IP address is within the IP address subrange of the searching node; in response to the target IP address being within the IP address subrange of the searching node, the security policy corresponding to the searching node is determined as the target security policy; in response to the target IP address being outside of the IP address subrange of the searching node, with the target IP address being greater than the IP address of the right endpoint of the IP address subrange of the searching node, and the right subtree of the searching node being not empty, taking the right subtree as the searching node, and continuing to determine whether the target IP address is within the IP address subrange of the searching node; and with the target IP address being less than the IP address of the left endpoint of the IP address subrange of the searching node, and the left subtree of the searching node being not empty, taking the left subtree as the searching node, and continuing to determine whether the target IP address is within the IP address subrange of the searching node.

In some examples, the aforementioned balanced binary tree may be a traditional balanced binary tree, and may also be a red-black tree, which is a self-balancing binary tree. Since the aforementioned balanced binary tree is a tree structure, and the subtrees in the balanced binary tree may be set to be ordered or unordered. To improve the speed of policy searching, in the present disclosure, in response to generating the IP policy group by using a balanced binary tree based on the IP address subranges and their corresponding security policies, the subtrees may be set to be ordered, and then the corresponding IP address subranges and security policies are loaded onto each subtree, thereby obtaining an ordered tree-structured IP policy group.

On this basis, in response to searching for policies based on the target IP address, it may be implemented based on the aforementioned processes. In some examples, each tree in the tree-structured IP policy group may be regarded as a node. During the first search, the root node may be set as the current searching node. For convenience of description, the IP address subrange corresponding to the current searching node is denoted as subrange 1, and the security policy corresponding to the current searching node is denoted as security policy 1 for illustration. Based on this, it is determined whether the target IP address is matched with the key of the searching node, which is subrange 1. In response to determining that the target IP address is matched with the key of the searching node, the target IP address belongs to subrange 1, and then the value of the current searching node, which is security policy 1, may be output as the hit target security policy.

In response to determining that the target IP address is not matched with the key of the searching node, the current target IP address is not within the aforementioned subrange 1. Then, the target IP address may be compared with the IP addresses of the endpoints of subrange 1. With the target IP address being greater than the IP address of the right endpoint of subrange 1, since the IP addresses in the right subtree are greater than those in the left subtree, whether the right subtree of the current searching node is empty may be determined. In response to the right subtree of the current searching node is empty, the match is considered failed; in response to the right subtree being non-empty, the right subtree may be taken as the current searching node, and the above determining process is repeated until a matching IP address subrange is found or the match fails.

In a similar way, with the target IP address being less than the IP address of the left endpoint of subrange 1, since the IP addresses in the left subtree are less than those in the right subtree, whether the left subtree of the current searching node is empty may be determined. In response to the left subtree of the current searching node is empty, the match is considered failed; in response to the left subtree being non-empty, the left subtree may be taken as the current searching node, and the above determining process is repeated until a matching IP address subrange is found or the match fails. In this way, the security policy corresponding to the target IP address may be quickly found.

In some examples, based on any of the above examples, in this example, the aforementioned IP address subranges may be determined by: obtaining the IP addresses that are pre-configured, and the security policies respectively corresponding to the IP addresses; for each of the IP addresses, determining the network segment that the IP address belongs to as the IP address range corresponding to the IP address; determining an intersection between each at least two IP address ranges to obtain several first IP address subranges, where one of identical IP address subranges among the several first IP address subranges is retained; for each IP address range, removing the first IP address subrange in the IP address range, and forming a second IP address subrange consisting of IP addresses less than an IP address of the left endpoint of the first IP address subrange, and forming a third IP address subrange consisting of IP addresses greater than an IP address of the right endpoint of the first IP address subrange.

In some examples, taking the IP addresses and the security policies corresponding to respective IP addresses shown in Table 2 as an example for illustration, based on each IP address in Table 2, the network segment that the IP address belongs to may be determined, which is the IP address range corresponding to the IP address. The corresponding relationship between the obtained IP address ranges and security policies may refer to Table 3.

**Table 2**

| Security Policy Name | IP Address |
|---|---|
| POLICY1 | 192.168.1.0/24 |
| POLICY2 | 192.168.1.100 |
| POLICY3 | 192.168.0.0/16 |
| ... | ... |
| POLICY999 | 192.170.1.1 |
| POLICY1000 | 192.0.0.0/8 |

**Table 3**

| Policy Name | IP Address | IP Address Range |
|---|---|---|
| POLICY1 | 192.168.1.0/24 | 192.168.1.0-192.168.1.255 |
| POLICY2 | 192.168.1.100 | 192.168.1.100-192.168.1.100 |
| POLICY3 | 192.168.0.0/16 | 192.168.0.0-192.168.255.255 |
| ... | ... | ... |
| POLICY999 | 192.170.1.1 | 192.170.1.1-192.170.1.1 |
| POLICY1000 | 192.0.0.0/8 | 192.0.0.0-192.255.255.255 |

In Table 3, for the IP address 192.168.1.0/24, it indicates that the first 24 bits of the IP address are significant, while the last 8 bits of the IP address are not concerned. Therefore, the subnet range may span from 0 to 2^8-1=255. Therefore, the subnet corresponding to this IP address is 192.168.1.0-192.168.1.255, and in a similar way, the IP address range for this subnet is 192.168.1.0-192.168.1.255. Furthermore, 192.168.1.100 mentioned above is a fixed IP address, the subnet corresponding to this IP address includes only this IP address. In other words, there may be an IP address range including a single IP address. Therefore, the IP address range corresponding to this IP address is 192.168.1.100-192.168.1.100.

Furthermore, after determining the respective IP address ranges for the IP addresses, the process of dividing these ranges into IP address subranges without overlapping may be carried out. In some examples, the division logic illustrated in FIG. 2 may be referenced for explanation. In FIG. 2, there are three IP address ranges, represented by Line Segment 1 for IP address range 1, Line Segment 2 for IP address range 2, and Line Segment 3 for IP address range 3. On this basis, in response to dividing the IP address subranges, the intersections between each at least two of Line Segment 1, Line Segment 2, and Line Segment 3 in FIG. 2 may be determined first. It may be seen that the intersection of Line Segment 1, Line Segment 2, and Line Segment 3 is Sub-segment 2, and the intersection of Line Segment 1 and Line Segment 3 is Sub-segment 3. Based on the above description, Sub-segment 2 and Sub-segment 3 are the aforementioned first IP address subranges, and one Sub-segment 2 and one Sub-segment 3 are retained in the first IP address subranges. On this basis, the security policies corresponding to Sub-segment 2 include Security Policy 1 of Line Segment 1, Security Policy 2 of Line Segment 2, and Security Policy 3 of Line Segment 3; in a similar way, Sub-segment 3 is also part of the aforementioned first IP address subranges, and the security policies corresponding to Sub-segment 3 include Security Policy 1 of Line Segment 1 and Security Policy 3 of Line Segment 3.

Based on this, for Line Segment 1, based on the aforementioned determined first IP address subranges, Line Segment 1 may be divided into Sub-segment 2, Sub-segment 3, and Sub-segment 4. Since the IP address of Sub-segment 4 is greater than the IP address at the right endpoint of Sub-segment 3, Sub-segment 4 is the aforementioned third IP address subrange. Similarly, for Line Segment 2, based on the aforementioned determined first IP address subranges, Line Segment 2 may be divided into Sub-segment 1 and Sub-segment 2. Since Sub-segment 1 is at the left of Sub-segment 2, i.e., the IP address of Sub-segment 1 is less than the IP address at the left endpoint of Sub-segment 2, Sub-segment 1 is the aforementioned second IP address subrange. For Line Segment 3, based on the aforementioned determined first IP address subranges, Line Segment 3 may be divided into Sub-segment 2 and Sub-segment 3. Since both Sub-segment 2 and Sub-segment 3 are intersection sub-segments, Line Segment 3 does not have the aforementioned second IP address subrange and the third IP address subrange. Based on this, the IP address subranges for respective IP addresses are obtained, and the obtained IP address subranges are not overlapped.

Furthermore, after obtaining the IP address subranges, respective identical IP address subranges correspond to one security policy group, the security policy group includes one or more security policies corresponding to one or more IP address ranges that the identical IP address subrange belongs to respectively.

In some examples, taking FIG. 2 as an example for explanation, both Sub-segment 2 and Sub-segment 3 in FIG. 2 are identical IP address subranges. Since Sub-segment 2 belongs to Line Segment 1, Line Segment 2, and Line Segment 3, based on the above description, the corresponding security policy group for Sub-segment 2 may include Security Policy 1, Security Policy 2, and Security Policy 3; similarly, the corresponding security policy group for Sub-segment 3 may include Security Policy 1 and Security Policy 3.

To facilitate understanding of this example, an example of IP address subranges obtained based on the IP address ranges in Table 3, as shown in Table 4, may be taken as an example.

**Table 4**

| Security Policy Name | IP Address Range | IP Address Subrange with No Overlap |
|---|---|---|
| POLICY1 | 192.168.1.0-192.168.1.255 | 192.168.1.0-192.168.1.99 |
| | | 192.168.1.100-192.168.1.100 |
| | | 192.168.1.101-192.168.1.255 |
| POLICY2 | 192.168.1.100-192.168.1.100 | 192.168.1.100-192.168.1.100 |
| POLICY3 | 192.168.0.0-192.168.255.255 | 192.168.0.0-192.168.0.255 |
| | | 192.168.1.0-192.168.1.99 |
| | | 192.168.1.100-192.168.1.100 |
| | | 192.168.1.101-192.168.1.255 |
| | | 192.168.2.0-192.168.255.255 |
| ... | ... | ... |
| POLICY999 | 192.170.1.1-192.170.1.1 | 192.170.1.1 to 192.170.1.1 |
| | | 192.0.0.0-192.167.255.255 |
| | | 192.168.0.0-192.168.0.255 |
| | | 192.168.1.0-192.168.1.99 |
| | | 192.168.1.100-192.168.1.100 |
| POLICY1000 | 192.0.0.0-192.255.255.255 | 192.168.1.101-192.168.1.255 |
| | | 192.168.2.0-192.168.255.255 |
| | | 192.169.0.0-192.170.1.0 |
| | | 192.170.1.1-192.170.1.1 |
| | | 192.170.1.2-192.255.255.255 |

Furthermore, the corresponding relationship between the obtained non-overlapping IP address subranges and the security policies/security policy groups may be shown in Table 5.

**Table 5**

| IP Address Subrange with No Overlap | Security Policy Name |
|---|---|
| 192.0.0.0-192.167.255.255 | {POLICY1000} |
| 192.168.0.0-192.168.0.255 | { POLICY3, POLICY1000 } |
| 192.168.1.0-192.168.1.99 | { POLICY1, POLICY3, POLICY1000 } |
| 192.168.1.100-192.168.1.100 | { POLICY1, POLICY2, POLICY3, POLICY1000 } |
| 192.168.1.101-192.168.1.255 | { POLICY1, POLICY3, POLICY1000 } |
| 192.168.2.0-192.168.255.255 | { POLICY3, POLICY1000 } |
| 192.169.0.0-192.170.1.0 | {POLICY1000} |
| 192.170.1.1-192.170.1.1 | { POLICY999, POLICY1000 } |
| 192.170.1.2-192.255.255.255 | {POLICY1000} |

Furthermore, as shown in Table 5, some IP address subranges include a plurality of the security policies, therefore, the form of security policy group may be represented as a set.

Furthermore, the IP policy groups may be constructed based on the following process: by using a set algorithm, each first IP address subrange is taken as a key, and the security policy group corresponding to the first IP address subrange is taken as the value. Similarly, each second IP address subrange is taken as a key, and the security policy corresponding to the second IP address subrange is taken as the value. Each third IP address subrange is also taken as a key, and the security policy corresponding to the third IP address subrange is taken as the value. In this way, the IP policy groups are constructed.

In some examples, this example provides two methods for constructing IP policy groups: a construction method corresponding to an array structure and a construction method using a balanced binary tree or a red-black tree. In some examples, in response to the IP policy groups being stored in an array structure, the IP address subranges are ordered, and then the IP address subranges and their corresponding security policies are written into the array structure to obtain the IP policy groups with an array structure. In response to the IP policy groups being a tree structure, taking the balanced binary tree as an example, the balanced binary tree may be set to be ordered, and then the IP address subranges and their corresponding security policies are loaded on the corresponding tree to obtain the IP policy groups with a tree structure.

At this point, since the IP address subranges in the IP policy groups of this example are ordered with no overlap, the speed of policy search based on the target IP address may be improved. This also solves the problem of long construction time and high memory resource consumption when building IP policy groups for massive IP addresses. At the same time, since the IP policy groups save memory, the delay problem of configuration taking effect is alleviated.

Based on the same inventive concept, the present disclosure further provides a policy matching apparatus corresponding to the above policy matching method. The example of the policy matching apparatus may refer to the description of the above policy matching method, and will not be discussed here one by one.

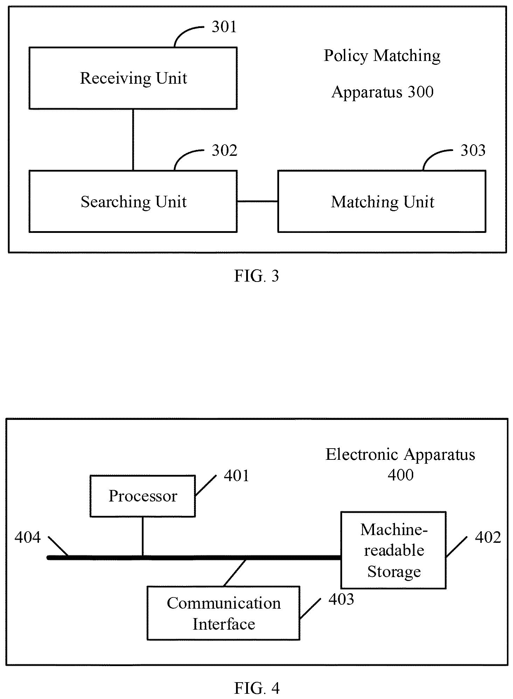

Refer to FIG. 3, which is an exemplary example of a policy matching apparatus provided by the present disclosure, applied in a network security apparatus. The policy matching apparatus 300 includes:
a receiving unit 301 for receiving a service packet;
a searching unit 302 for searching, based on a target internet protocol (IP) address of the service packet and by using a searching algorithm matching with an IP policy group, the IP policy group, to determine a target security policy corresponding to a target IP address subrange that the target IP address belongs to; where the IP policy group is constructed based on a set algorithm, IP addresses that are pre-configured, and security policies respectively corresponding to the IP addresses, keys of the IP policy group include one or more IP address subranges obtained by dividing an IP address range that each of the IP addresses belongs to, values of the IP policy group include one or more security policies corresponding to one or more IP address ranges that each of the one or more IP address subranges belongs to, and the one or more IP address subranges in the IP policy group are ordered with no overlap with each other; and
a matching unit 303 for performing, by using the target security policy, a policy matching processing on the service packet.

Since the above IP policy groups are constructed based on a set algorithm, IP addresses that are pre-configured, and security policies respectively corresponding to the IP addresses, and the policy search is performed based on the searching algorithm corresponding to the IP policy groups, the speed of security policy search may be ensured when performing policy search based on the compatible searching algorithm. Moreover, the keys of the above IP policy groups include the one or more IP address subranges obtained by dividing an IP address range that each of the IP addresses belongs to, the values of the IP policy group include the one or more security policies corresponding to one or more IP address ranges that each of the one or more IP address subranges belongs to, and the one or more IP address subranges in the IP policy group are ordered. In this way, when performing policy search based on the ordered IP policy groups, the policy search speed may be further improved. Furthermore, the one or more IP address subranges in the IP policy groups do not overlap, such that when performing policy search based on the target IP address, the situation of determining at least two IP address subranges may be avoided, thereby preventing the occurrence of searching inaccurate multiple security policies due to multiple IP address subranges are matched.

In some examples, the searching unit 302 is for applying a binary searching algorithm to search, based on the target IP address in the service packet, the IP policy group, in response to the IP policy group adopting an array structure.

In another example, the searching unit 302 is for:
in response to determining that the IP policy group is an IP policy tree constructed by applying a balanced binary tree algorithm based on the one or more IP address subranges of each of the IP addresses and the one or more security policies corresponding to the one or more IP address subranges, for a current searching node, determining whether the target IP address is within the IP address subrange of the searching node;
in response to the target IP address being within the IP address subrange of the searching node, determining the security policy corresponding to the searching node as the target security policy;
in response to the target IP address being outside of the IP address subrange of the searching node, with the target IP address being greater than an IP address of a right endpoint of an IP address subrange corresponding to the searching node, and the right subtree of the searching node being not empty, taking the right subtree as the searching node, and continuing to determine whether the target IP address is within the IP address subrange of the searching node; and with the target IP address being less than an IP address of a left endpoint of an IP address subrange of the searching node, and the left subtree of the searching node being not empty, taking the left subtree as the searching node, and continuing to determine whether the target IP address is within the IP address subrange of the searching node or not.

In some examples, the above policy matching apparatus 300 may further include:
an obtaining unit (not shown) for obtaining the IP addresses that are pre-configured and security policies respectively corresponding to the IP addresses;
a first determination unit (not shown) for determining, for each of the IP addresses, a network segment that the IP address belongs to as an IP address range corresponding to the IP address;
a second determination unit (not shown) for determining an intersection between each at least two IP address ranges to obtain a plurality of first IP address subranges, where one of the identical IP address subranges among the plurality of first IP address subranges is retained;
a composition unit (not shown) for removing, for each IP address range, the first IP address subrange in the IP address range, and forming a second IP address subrange consisting of IP addresses less than an IP address of a left endpoint of the first IP address subrange, and forming a third IP address subrange consisting of IP addresses greater than an IP address of a right endpoint of the first IP address subrange.

In some examples, respective identical IP address subranges correspond to one security policy group, the security policy group includes one or more security policies corresponding to one or more IP address ranges that the identical IP address subrange belongs to respectively.
On this basis, the above policy matching apparatus 300may further include:
a construction unit (not shown) for applying a set algorithm, taking each first IP address subrange as a key and a security policy group corresponding to each first IP address subrange as a value, taking each second IP address subrange as a key and a security policy corresponding to each second IP address subrange as a value, and taking each third IP address subrange as a key and a security policy corresponding to each third IP address subrange as a value to construct the IP policy group.

Based on the same inventive concept, an example of the present disclosure provides an electronic apparatus 400, which may be the aforementioned network security apparatus, etc. As shown in FIG. 4, the electronic apparatus 400 may include a processor 401 and a machine-readable storage medium 402. The machine-readable storage medium 402 stores computer programs that may be performed by the processor 401. The processor 401 is prompted by the computer programs to perform the policy matching method provided in any one example of the present disclosure. In addition, the electronic apparatus 400 further includes a communication interface 403 and a communication bus 404, where the processor 401, the communication interface 403, and the machine-readable storage medium 402 communicate with each other through the communication bus 404.

The communication bus mentioned in the above electronic apparatus 400 may be a peripheral component interconnect (PCI) bus or an extended industry standard architecture (EISA) bus, etc. The communication bus may be divided into an address bus, a data bus, a control bus, etc. For ease of representation, only one thick line is used in the figure, but it does not indicate that there is only one bus or one type of bus.

The communication interface is used for communication between the aforementioned electronic apparatus 400 and other apparatuses.

The aforementioned machine-readable storage medium 402 may be a memory, which may include Random Access Memory (RAM), DDR SRAM (Double Data Rate Synchronous Dynamic Random Access Memory), and may also include Non-Volatile Memory (NVM), such as at least one disk memory. In some examples, the memory may also be at least one storage device located away from the aforementioned processor.

The above processor may be a general-purpose processor, including a Central Processing Unit (CPU), a Network Processor (NP), etc.; it may also be a Digital Signal Processor (DSP),

The aforementioned processor may be a general-purpose processor, including a central processing unit (CPU) or a Network Processor (NP), among others. It may also be a digital signal processor (DSP), an application specific integrated circuit (ASIC), a Field-Programmable Gate Array (FPGA), or other programmable logic apparatuses, discrete gate or transistor logic apparatuses, and discrete hardware components.

Regarding the examples of electronic apparatuses and machine-readable storage media, the descriptions are kept concise due to the substantial similarity in method content to the aforementioned method examples. For relevant details, please refer to the descriptions in the method example section.

It should be clarified that in the present context, relational terms such as "first" and "second" are merely used to distinguish one entity or operation from another, without necessarily implying any actual relationship or order between these entities or operations. Furthermore, the terms "include," "comprise," or any of their variants are intended to cover non-exclusive inclusion, such that a process, method, article, or apparatus that includes a series of elements not only encompasses those elements but may also include other elements not explicitly listed, or may include elements inherent to such a process, method, article, or apparatus. In the absence of further restrictions, elements defined by the phrase "including a ..." do not exclude the presence of additional identical elements in the process, method, article, or apparatus that includes the said elements.

The realization processes of the functions and roles of each unit/module in the aforementioned apparatus are detailed specifically in the corresponding processes of the aforementioned method, and thus will not be repeated here.

For the apparatus examples, since they basically correspond to the method examples, relevant details may be found in the descriptions of the method example section. The apparatus examples described above are merely illustrative. The units/modules described as separate components may or may not be physically separated. The components displayed as units/modules may or may not be physical units/modules, meaning they may be located in one place or distributed across multiple network units/modules. Depending on actual needs, some or all of the units/modules may be selected to achieve the objectives of the present disclosure. Ordinary technicians in the field may understand and implement it without exerting creative efforts.

The above descriptions are merely the preferred examples of the present disclosure and are not intended to limit it. Any modifications, equivalent substitutions, improvements, etc., made within the spirit and principles of the present disclosure should be included within the scope of protection of the present disclosure.

## Claims

1. A policy matching method, applied to a network security apparatus, wherein the method comprises:
receiving a service packet;
searching, based on a target internet protocol, IP, address of the service packet and by using a searching algorithm matching with an IP policy group, the IP policy group, to determine a target security policy corresponding to a target IP address subrange that the target IP address belongs to; wherein the IP policy group is constructed based on a set algorithm, IP addresses that are pre-configured, and security policies respectively corresponding to the IP addresses, keys of the IP policy group comprise one or more IP address subranges obtained by dividing an IP address range that each of the IP addresses belongs to, values of the IP policy group comprise one or more security policies corresponding to one or more IP address ranges that each of the one or more IP address subranges belongs to, and the one or more IP address subranges in the IP policy group are ordered with no overlap with each other; and
performing, by using the target security policy, a policy matching processing on the service packet.

2. The method of claim 1, wherein searching, based on the target IP address of the service packet and by using the searching algorithm matching with the IP policy group, the IP policy group, comprises:
applying a binary searching algorithm to search, based on the target IP address of the service packet, the IP policy group, in response to the IP policy group being adopted an array structure.

3. The method of claim 1, wherein searching, based on the target IP address of the service packet and by using the searching algorithm matching with the IP policy group, the IP policy group, to determine the target security policy corresponding to the target IP address subrange that the target IP address belongs to, comprises:
in response to determining that the IP policy group is an IP policy tree constructed by applying a balanced binary tree algorithm based on the one or more IP address subranges of each of the IP addresses and the one or more security policies corresponding to the one or more IP address subranges,
for a current searching node, determining whether the target IP address is within the IP address subrange of the current searching node;
in response to the target IP address being within the IP address subrange of the current searching node, determining the security policy corresponding to the current searching node as the target security policy; and
in response to the target IP address being outside of the IP address subrange of the current searching node,
with the target IP address being greater than an IP address of a right endpoint of an IP address subrange of the current searching node, and a right subtree of the current searching node being not empty, taking the right subtree as the current searching node, and continuing to determine whether the target IP address is within the IP address subrange of the current searching node; and
with the target IP address being less than an IP address of a left endpoint of the IP address subrange of the current searching node, and a left subtree of the current searching node being not empty, taking the left subtree as the current searching node, and continuing to determine whether the target IP address is within the IP address subrange of the current searching node.

4. The method of claim 1, wherein the IP address subranges are determined by:
obtaining the IP addresses that are pre-configured and the security policies respectively corresponding to the IP addresses;
for each of the IP addresses, determining a network segment that the IP address belongs to as an IP address range corresponding to the IP address;
determining an intersection between each at least two IP address ranges to obtain a plurality of first IP address subranges, wherein one of identical IP address subranges among the plurality of the first IP address subranges is retained;
for each IP address range, removing the first IP address subrange in the IP address range, and forming a second IP address subrange consisting of IP addresses less than an IP address of a left endpoint of the first IP address subrange, and forming a third IP address subrange consisting of IP addresses greater than an IP address of a right endpoint of the first IP address subrange.

5. The method of claim 4, wherein respective identical IP address subranges correspond to one security policy group, the security policy group comprises one or more security policies corresponding to one or more IP address ranges that the identical IP address subrange belongs to respectively;
wherein the IP policy group is constructed by:
applying a set algorithm, taking each first IP address subrange as a key and a security policy group corresponding to each first IP address subrange as a value, taking each second IP address subrange as a key and a security policy corresponding to each second IP address subrange as a value, and taking each third IP address subrange as a key and a security policy corresponding to each third IP address subrange as a value to construct the IP policy group.

6. A policy matching apparatus, applied in a network security apparatus, the apparatus comprises:
a receiving unit is to receive a service packet;
a searching unit is to search, based on a target internet protocol, IP, address of the service packet and by using a searching algorithm matching with an IP policy group, the IP policy group, to determine a target security policy corresponding to a target IP address subrange that the target IP address belongs to; wherein the IP policy group is constructed based on a set algorithm, IP addresses that are pre-configured, and security policies respectively corresponding to the IP addresses, keys of the IP policy group comprise one or more IP address subranges obtained by dividing an IP address range that each of the IP addresses belongs to, values of the IP policy group comprise one or more security policies corresponding to one or more IP address ranges that each of the one or more IP address subranges belongs to, and the one or more IP address subranges in the IP policy group are ordered with no overlap with each other;
a matching unit is to perform, by using the target security policy, a policy matching processing on the service packet.

7. The apparatus of claim 6, wherein, the searching unit is to:
apply a binary searching algorithm to search, based on the target IP address of the service packet, the IP policy group, in response to the IP policy group being adopted an array structure.

8. The apparatus of claim 6, wherein, the searching unit is to:
in response to determining that the IP policy group is an IP policy tree constructed by applying a balanced binary tree algorithm based on the one or more IP address subrange of each of the IP addresses and the one or more security policies corresponding to the one or more IP address subranges;
for a current searching node, determine whether the target IP address is within the IP address subrange of the current searching node;
in response to the target IP address being located within the IP address subrange of the current searching node, determine the security policy corresponding to the current searching node as the target security policy; and
in response to the target IP address being outside of the IP address subrange of the current searching node,
with the target IP address being greater than an IP address of a right endpoint of an IP address subrange of the current searching node, and a right subtree of the current searching node being not empty, taking the right subtree as the current searching node, continue to determine whether the target IP address is within the IP address subrange of the searching node; and
with the target IP address being less than an IP address of a left endpoint of the IP address subrange of the current searching node, and a left subtree of the current searching node being not empty, taking the left subtree as the current searching node, and continue to determine whether the target IP address is within the IP address subrange of the current searching node or not.

9. The apparatus of claim 6 further comprising:
an obtaining unit is to obtain the IP addresses that are pre-configured and security policies respectively corresponding to the IP addresses;
a first determination unit is to determine, for each of the IP addresses, a network segment that the IP address belongs to as an IP address range corresponding to the IP address;
a second determination unit is to determine an intersection between each at least two IP address ranges to obtain a plurality of first IP address subranges, wherein one of identical IP address subranges among the plurality of first IP address subranges is retained;
a composition unit is to, for each IP address range, remove the first IP address subrange in the IP address range, and form a second IP address subrange consisting of IP addresses less than an IP address of a left endpoint of the first IP address subrange, and form a third IP address subrange consisting of IP addresses greater than an IP address of a right endpoint of the first IP address subrange.

10. The apparatus of claim 6, wherein respective identical IP address subranges correspond to one security policy group, the security policy group comprises one or more security policies corresponding to one or more IP address ranges that the identical IP address subrange belongs to respectively;
the apparatus further comprises:
a construction unit is to apply a set algorithm, take each first IP address subrange as a key and a security policy group corresponding to each first IP address subrange as a value, take each second IP address subrange as a key and a security policy corresponding to each second IP address subrange as a value, and take each third IP address subrange as a key and a security policy corresponding to each third IP address subrange as a value to construct the IP policy group.

11. An electronic apparatus, comprising:
a processor, and
a machine-readable storage medium storing computer programs executable by the processor,
wherein the processor, prompted by the computer programs, executes the method according to any one of claims 1 to 5.

12. A machine-readable storage medium, storing computer programs, wherein when invoked and executed by a processor, the computer programs prompt the processor to execute the method according to any one of claims 1 to 5.
